# EUROPEAN PATENT APPLICATION

(11) **EP 4 629 721 A1**
(43) Date of publication of application: **08.10.2025**
(21) Application number: 22966964.3
(22) Date of filing: 02.12.2022
(51) Int. Cl.: H04W 72/04

(54) **METHOD AND APPARATUS FOR SENDING RECEPTION CAPABILITY INFORMATION, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/136359
(87) International publication number: WO 2024/113378

(57) **Abstract**

Provided in the present disclosure are a method and apparatus for sending reception capability information, and a readable storage medium. The method comprises: sending capability information to a network device, wherein the capability information comprises the capability of a user equipment to receive positioning reference signals (PRSs) and set downlink signals on different carriers at the same time-domain position. In the method disclosed in the present disclosure, a user equipment sends capability information to a network device, so as to report to the network device the capability of the user equipment to receive PRSs and set downlink signals on multiple carriers. Therefore, the network device can learn of the capability of the user equipment to receive signals in a multi-carrier positioning measurement scenario, thereby facilitating rational scheduling in view of the capability of the user equipment.

## Description

### TECHNICAL FIELD

The present disclosure relates to the field of wireless communication technology, and specifically to a method and apparatus for sending/receiving capability information, and a read-able storage medium.

### BACKGROUND

A positioning reference signal (PRS) is introduced in Release 16 (R16) of the 3rd generation partnership project (3GPP). The PRS can be used for positioning measurement. In a new radio (NR) positioning measurement, a user equipment (UE) supports measuring the PRS on a single carrier. In order to improve positioning accuracy, positioning measurement based on multiple carriers is introduced, as a result, the problem of potential conflict between the PRS and other downlink signals during the positioning measurement needs to be solved.

### SUMMARY

The present disclosure provides a method and apparatus for sending/receiving capability information, and a read-able storage medium.

According to a first aspect of the present disclosure, a method for sending capability information is provided, performed by a user equipment (UE), including:
sending capability information to a network device, in which the capability information includes a capability of the UE to receive a positioning reference signal (PRS) and a set downlink signal on different carriers at a same time domain position.

In the method of the present disclosure, the UE sends the capability information to the network device, to report its own capability of receiving a positioning reference signal (PRS) and a set downlink signal on multiple carriers to the network device. In this way, the network device may know the capability of the UE to receive signals in a multi-carrier positioning measurement scenario, so as to combine the capability of the UE for reasonable scheduling.

In some possible implementations, the set downlink signal comprises at least one of:
a first type of downlink signal used for mobility measurement; or
a second type of downlink signal used to carry data.
In some possible implementations,
a sub-carrier spacing (SCS) for the PRS is the same as an SCS for the set downlink signal, and the capability information is a first capability of receiving the PRS and the set downlink signal on different carriers at the same time domain position; or
an SCS for the PRS is different from an SCS for the first type of downlink signal, and the capability information is a second capability of receiving the PRS and the first type of downlink signal on different carriers at the same time domain position; or
an SCS for the PRS is different from an SCS for the second type of downlink signal, and the capability information is a third capability of receiving the PRS and the second type of downlink signal on different carriers at the same time domain position.

In some possible implementations, the method further comprises:
receiving measurement configuration information sent by the network device, wherein the measurement configuration information comprises a measurement gap for measuring the PRS; and
receiving and measuring the PRS within the measurement gap, wherein the UE does not support the first capability.

In some possible implementations, the method further comprises:
receiving the PRS on at least one carrier among multiple carriers at the same time domain position and receiving the set downlink signal on a remaining carrier among the multiple carriers at the same time domain position, wherein the UE supports the first capability.

In some possible implementations, the method further comprises:
receiving the PRS on a first carrier among multiple carriers and the first type of downlink signal on a second carrier among the multiple carriers at the same time domain position without monitoring the second type of downlink signal, wherein the UE supports the first capability and the second capability, and does not support the third capability.

In some possible implementations, the method further comprises:
receiving a signal with a higher priority between the PRS and the first type of downlink signal on a first carrier among multiple carriers at the same time domain position, and receiving the second type of downlink signal on a second carrier among the multiple carriers at the same time domain position, wherein the UE supports the first capability and the third capability, and does not support the second capability.

In some possible implementations, the method further comprises:
receiving the PRS on a first carrier among multiple carriers at the same time domain position, and receiving the first type of downlink signal or the second type of downlink signal on a second carrier among the multiple carriers at the same time domain position, wherein the UE supports the first capability, the second capability and the third capability.

In some possible implementations, the method further comprises:
receiving the PRS on a first carrier among multiple carriers at the same time domain position, and receiving the first type of downlink signal on a second carrier among the multiple carriers and the second type of downlink signal on a third carrier among the multiple carriers at the same time domain position, wherein the UE supports the first capability, the second capability and the third capability.

In some possible implementations, the first type of downlink signal is one of:
a synchronization signal block (SSB); or
a channel state information reference signal (CSI-RS).
In some possible implementations, the second type of downlink signal is one of:
a physical downlink shared channel (PDSCH); or
a physical downlink control channel (PDCCH).

According to a second aspect of the present disclosure, a method for receiving capability information is provided, performed by a network device, including:
receiving capability information sent by a user equipment (UE), in which the capability information includes a capability of the UE to receive a positioning reference signal (PRS) and a set downlink signal on different carriers at a same time domain position; and
performing scheduling according to the capability information.

In the method of the present disclosure, based on the capability information, the network device may know the capability of the UE to receive the PRS as the set downlink signal on multiple carriers, so as to combine the capability of the UE for reasonable scheduling, thereby realizing effective scheduling of other downlink signals in a multi-carrier measurement scenario.

In some possible implementations,
a sub-carrier spacing (SCS) for the PRS is the same as an SCS for the set downlink signal, and the capability information is a first capability of receiving the PRS and the set downlink signal on different carriers at the same time domain position; or
an SCS for the PRS is different from an SCS for a first type of downlink signal, and the capability information is a second capability of receiving the PRS and the first type of downlink signal on different carriers at the same time domain position; or
an SCS for the PRS is different from an SCS for a second type of downlink signal, and the capability information is a third capability of receiving the PRS and the second type of downlink signal on different carriers at the same time domain position.

In some possible implementations, performing scheduling according to the capability information comprises:
sending measurement configuration information to the UE, where the measurement configuration information comprises a measurement gap for measuring the PRS; and
sending the PRS within the measurement gap, wherein the UE does not support the first capability.

In some possible implementations, performing scheduling according to the capability information comprises:
sending the PRS on at least one carrier among multiple carriers at the same time domain position, and sending the set downlink signal on a remaining carrier among the multiple carriers at the same time domain position, wherein the UE supports the first capability.

In some possible implementations, performing scheduling according to the capability information comprises:
sending the PRS on a first carrier among multiple carriers and the first type of downlink signal on a second carrier among the multiple carriers at the same time domain position without sending the second type of downlink signal, wherein the UE supports the first capability and the second capability, and does not support the third capability.

In some possible implementations, performing scheduling according to the capability information comprises:
sending a signal with a higher priority between the PRS and the first type of downlink signal on a first carrier among multiple carriers at the same time domain position, and sending the second type of downlink signal on a second carrier among the multiple carriers at the same time domain position, wherein the UE supports the first capability and the third capability, and does not support the second capability.

In some possible implementations, performing scheduling according to the capability information comprises:
sending the PRS on a first carrier among multiple carriers at the same time domain position, and sending the first type of downlink signal or the second type of downlink signal on a second carrier among the multiple carriers at the same time domain position, wherein the UE supports the first capability, the second capability and the third capability.

In some possible implementations, performing scheduling according to the capability information comprises:
sending the PRS on a first carrier among multiple carriers at the same time domain position, and sending the first type of downlink signal on a second carrier among the multiple carriers and the second type of downlink signal on a third carrier among the multiple carriers at the same time domain position, wherein the UE supports the first capability, the second capability and the third capability.

According to a third aspect of the present disclosure, a UE is provided. The UE includes a transceiver module, which may be used to support communication of a communication apparatus.

When performing the step according to the above first aspect, the transceiver module is configured to send capability information to a network device, wherein the capability information comprises a capability of the UE to receive a positioning reference signal (PRS) and a set downlink signal on different carriers at a same time domain position.

According to a fourth aspect of the present disclosure, a network device is provided. The network device includes a transceiver module and processing module computed to each other. The transceiver module may be used to support communication of a communication apparatus. The processing module may be used for the communication apparatus to perform processing operations, such as generating information/messages to be sent, or processing a received signal to obtain information/messages.

When performing the step according to the above second aspect, the transceiver module is configured to receive capability information sent by a user equipment (UE), wherein the capability information comprises a capability of the UE to receive a positioning reference signal (PRS) and a set downlink signal on different carriers at a same time domain position.

The processing module is configured to perform scheduling according to the capability information.

According to a fifth aspect of the present disclosure, a communication apparatus including a processor and a memory for storing a computer program is provided. The processor is configured to execute the computer program, to implement the first aspect or any one possible design of the first aspect.

According to a sixth aspect of the present disclosure, a communication apparatus including a processor and a memory for storing a computer program is provided. The processor is configured to execute the computer program, to implement the second aspect or any one possible design of the second aspect.

According to a seventh aspect of the present disclosure, a computer-readable storage medium for storing instructions (also called computer programs, or programs) is provided. When the instructions are executed on a computer, the computer is caused to implement the first aspect or any one possible design of the first aspect.

According to an eighth aspect of the present disclosure, a computer-readable storage medium for storing instructions (also called computer programs, or programs) is provided. When the instructions are executed on a computer, the computer is caused to implement the second aspect or any one possible design of the second aspect.

According to a ninth aspect of the present disclosure, a communication system is provided. The communication system includes a UE for performing the method described in the first aspect and a network device for performing the method described in the second aspect.

It should be understood that the foregoing general description and the following detailed description are exemplary and explanatory only and are not restrictive of the embodiments of the present disclosure.

### BRIEF DESCRIPTION OF THE DRAWINGS

The drawings described herein are used to provide a further understanding of embodiments of the present disclosure and constitute a part of the present disclosure. The illustrative embodiments of the embodiments of the present disclosure and their descriptions are used to explain the embodiments of the present disclosure and do not constitute an improper limitation on the embodiments of the present disclosure, in which:
the accompanying drawings, which are incorporated in and constitute a part of the specification, illustrate embodiments consistent with the present disclosure, and together with the specification, serve to explain principles of the embodiments of the present disclosure.
FIG 1 is a schematic diagram of a wireless communication system according to an embodiment of the present disclosure;
FIG 2 is a flowchart of a method for sending/receiving capability information according to an embodiment of the present disclosure;
FIG 3 is a flowchart of a method for sending/receiving capability information according to an embodiment of the present disclosure;
FIG 4 is a flowchart of a method for sending/receiving capability information according to an embodiment of the present disclosure;
FIG 5 is a flowchart of a method for sending/receiving capability information according to an embodiment of the present disclosure;
FIG 6 is a flowchart of a method for sending/receiving capability information according to an embodiment of the present disclosure;
FIG 7 is a flowchart of a method for sending/receiving capability information according to an embodiment of the present disclosure;
FIG 8 is a block diagram of a user equipment (UE) according to an embodiment of the present disclosure;
FIG 9 is a block diagram of a network device according to an embodiment of the present disclosure.

### DETAILED DESCRIPTION

The embodiments of the present disclosure are now further described in conjunction with the accompanying drawings and specific implementations.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

Embodiments of the present disclosure are described in detail below, examples of which are shown in the accompanying drawings, in which the same or similar reference numerals throughout represent the same or similar elements. The embodiments described below with reference to the accompanying drawings are exemplary and are intended to explain the present disclosure, but should not be construed as limiting the present disclosure.

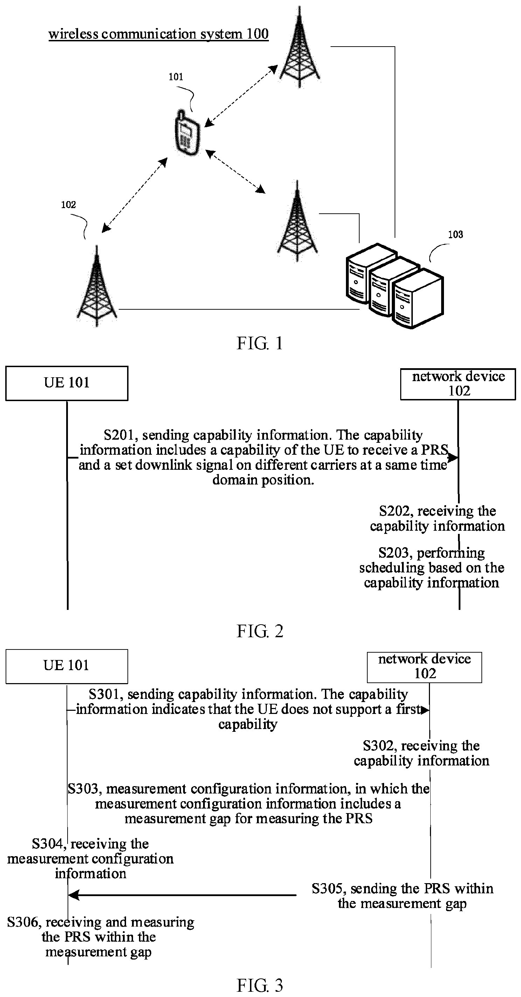

Please refer to FIG 1, FIG 1 is a schematic diagram of a wireless communication system 100 to which the method for sending/receiving capability information according to embodiments of the present disclosure is applicable. The wireless communication system 100 may be applied to both low-frequency scenarios and high-frequency scenarios. Application scenarios of the wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access networks (CRAN) systems, future fifth-generation (5G) systems, new radio (NR) communication systems, or future evolved public land mobile networks (PLMN) systems, etc.

As shown in FIG 1, the wireless communication system may include a user equipment (UE) 101, a network device 102 and a location management function (LMF) 103. During the positioning measurement, the LMF 103 may communicate with the UE 101 based on an LTE positioning protocol (LPP). In a communication process between the UE 101 and the LMF 103, the network device 102 may serve as a transparent transmission node to forward messages between the UE 101 and the LMF 103. For example, the network device 102 forwards a message sent by the UE 101 to the LMF 103; or the network device 102 forwards a message sent by the LMF103 to the UE 101. The LMF 103 may communicate with the network device 102 based on an NR positioning protocol A (NRPPA). In the wireless communication system, positioning service functions such as the LMF103 are specifically used to perform positioning-related configurations and calculations to maintain the privacy of positioning-related data and improve the security and reliability of positioning-related data.

The UE 101 may be a terminal, an access terminal, a terminal unit, a terminal station, a mobile station (MS), a remote station, a remote terminal, a mobile terminal, a wireless communication device, a terminal agent or a terminal device, etc. The UE 101 may have a wireless transceiving function, which may communicate with one or more network devices of one or more communication systems (such as wireless communication) and accept network services provided by the network devices. The network device 102 here includes but is not limited to the base station shown in the figure. For example, the UE 101 may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal device in a future 5G network, or a terminal device in a future evolved PLMN network, etc. The UE 101 is configured to support carrier aggregation and may be connected to multiple carrier units of the network device 102, including a primary carrier unit and one or more secondary carrier units.

The network device 102 may be an access network device (or access network point). The access network device refers to a device that provides a network access function, such as a radio access network (RAN) base station, etc. The network device 102 may specifically include a base station (BS), or include a base station and a wireless resource management device for controlling the base station, etc. The network device 102 may also include a relay station (relay device), an access point, a base station in a future 5G network, a base station in a future evolved PLMN network, or an NR base station, etc. The network device 102 may be a wearable device or a vehicle-mounted device. The network device 102 may also be a communication chip with a communication module. For example, the network device 102 includes but is not limited to: a next-generation base station (gnodeB, gNB) in 5G, an evolved node B (eNB) in an LTE system, a radio network controller (RNC), a node B (NB) in a WCDMA system, a wireless controller in a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

The LMF 103 is a unit in the 5G core network, which can be used as a positioning server to provide the UE 101 with configuration or auxiliary data related to positioning and measurement. For example, the LMF 103 may provide the UE 101 with information related to signals to be measured. The LMF 103 may also configure information related to signal to be sent for different network nodes, such as network device 102. During the positioning measurement, the LMF 103 may receive measurement results of the UE 101 and the network device 102, and determine position information of the UE 101 in combination with the measurement results.

The embodiments of the present disclosure provide a method for sending/receiving capability information. With reference to FIG 2, FIG 2 is a flowchart of a method for sending/receiving capability information according to an embodiment. As shown in FIG 2, the method may include steps S201 to S203 specifically.

At step S201, the UE 101 sends capability information to the network device 102. The capability information includes a capability of the UE 101 to receive a positioning reference signal (PRS) and a set downlink signal on different carriers at a same time domain position.

The embodiment of the present disclosure may be applied to a positioning measurement scenario in a multi-carrier system, such as positioning measurement in a carrier aggregation (CA) or dual connectivity (DC) system.

In some possible implementations, in the positioning measurement scenario, the capability information of the UE 101 may be sent through the network device 102 to the LMF 103.

In this implementation, the LMF 103 may configure PRS resources on multiple carriers supported by the UE 101 based on the capability information of the UE 101.

In an example, the LMF 103 determines first configuration information and second configuration information based on the capability information of the UE 101. The LMF 103 sends the first configuration information to the UE 101 through the network device 102, to indicate to the UE 101 a time domain position of receiving the PRS on the multiple carriers. The LMF 103 sends the second configuration information to the network device 102, to indicate to the network device 102 a time domain position of sending the PRS on the multiple carriers.

In an example, the LMF 103 sends two kinds of configuration information to the network device 102 through a *ProvideAssistanceData* message. When forwarding the first configuration information, the network device 102 only forwards the message without processing the message.

In some possible implementations, the UE 101 may send the capability information to the network device 102 via IE MeasAndMobParametersMRDC signaling or IE MeasAndMobParameters signaling.

In some possible implementations, for multiple carriers in the multi-carrier system, such as two carriers, three carriers or more carriers, the PRS and the set downlink signal may be transmitted on different carriers, respectively. The capability information of the UE 101 is used to represent a capability of the UE 101 to receive signals on different carriers in this scenario.

In an example, the different carriers include a first carrier and a second carrier. The PRS is transmitted on the first carrier, and the set downlink signal is transmitted on the second carrier. The capability information includes a capability of the UE 101 to receive the PRS on the first carrier and the set downlink signal on the second carrier at the same time domain position.

In some possible implementations, the set downlink signal, for example, may include at least one of the followings:
a first type of downlink signal for mobility measurement; or
a second type of downlink signal used to carry data.

In an example, the first type of downlink signal may be one of the followings: a synchronization signal block (SSB) or a channel state information reference signal (CSI-RS).

In an example, the second type of downlink signal may be one of the followings: a physical downlink shared channel (PDSCH) or a physical downlink control channel (PDCCH).

In some possible implementations, the capability information indicates whether the UE supports at least one of the following capabilities: a first capability, a second capability or a third capability.

A sub-carrier spacing (SCS) for the PRS and an SCS for the set downlink signal are the same, and the capability information is the first capability of receiving the PRS and the set downlink signal on different carriers at the same time domain position.

An SCS for the PRS is different from an SCS for the first type of downlink signal, and the capability information is the second capability of receiving the PRS and the first type of downlink signal on different carriers at the same time domain position.

An SCS for the PRS is different from an SCS for the second type of downlink signal, and the capability information is the third capability of receiving the PRS and the second type of downlink signal on different carriers at the same time domain position.

In this implementation, when the UE 101 does not support the first capability, the UE 101 generally does not support the second capability and the third capability.

In this implementation, when the UE 101 supports the second capability or the third capability, the UE 101 generally supports the first capability.

In this implementation, the different carriers may correspond to two different carriers, or three different carriers or more different carriers, and different signals are transmitted on different carriers.

At step S202, the network device 102 receives the capability information.

In some possible implementations, the capability information may indicate whether the UE 101 supports at least one of the following capabilities: the first capability, the second capability or the third capability. Regarding the specific capabilities corresponding to the first capability, the second capability and the third capability, reference may be made to the foregoing descriptions, which is not repeated here.

At step S203, the network device 102 performs scheduling based on the capability information.

**In** some possible implementations, in a positioning measurement scenario, the network device 102 performs the scheduling adaptively in combination with the capability information of the UE 101, for example performing measurement configuration or adjusting the way of sending signals on different carriers.

For example, when the UE 101 does not support the first capability, i.e., the UE 101 cannot receive the PRS and the set downlink signal on different carriers at the same time. The network device 102 may be configured to be applicable a measurement gap (MG) of transmitting the PRS on multiple carriers.

For another example, when the UE 101 supports the second capability, the network device 102 may send the PRS and the first type of downlink signal on different carriers, respectively.

For another example, when the UE 101 supports the third capability, the network device 102 may send the PRS and the second type of downlink signal on different carriers, respectively.

**In** this embodiment of the present disclosure, the UE 101 sends the capability information to the network device 102, to report its own capability of receiving a positioning reference signal (PRS) and a set downlink signal on multiple carriers to the network device 102. In this way, the network device 102 may know the capability of the UE 101 to receive signals in a multi-carrier positioning measurement scenario, so as to combine the capability of the UE 101 for reasonable scheduling.

The embodiments of the present disclosure provide a method for sending/receiving capability information. With reference to FIG 3, FIG 3 is a flowchart of a method for sending/receiving capability information according to an embodiment. As shown in FIG 3, the method may include steps S301 to S306 specifically.

At step S301, the UE 101 sends capability information to the network device 102. The capability information indicates that the UE 101 does not support a first capability. The first capability corresponds to a capability of receiving a positioning reference signal (PRS) and a set downlink signal on different carriers at a same time domain position in case that an SCS for the PRS and an SCS for the set downlink signal are the same.

In some possible implementations, when the UE 101 does not support the first capability, the UE 101 generally does not support a second capability and a third capability.

**In** some possible implementations, the different carriers may correspond to two different carriers, or three different carriers or more different carriers.

In some possible implementations, the set downlink signal may include a first type of downlink signal and/or a second type of downlink signal.

At step S302, the network device 102 receives the capability information.

At step S303, the network device 102 sends measurement configuration information to the UE 101, in which the measurement configuration information includes a measurement gap for measuring the PRS.

**In** some possible implementations, after receiving the capability information, the network device 102 may determine the measurement configuration information if the network device 102 learns that the UE 101 does not support the first capability.

In some possible implementations, before the network device 102determines the measurement configuration information, the UE 101 may send assistance information to the network device 102. The assistance information may include a measurement gap parameter expected by the UE 101 with the capability.

In an example, the assistance information may include frequency point information of a carrier, a starting offset of the measurement gap, or the like. The carrier(s) corresponding to the frequency point(s) in the assistance information may be one or more carriers of the multiple carriers.

In an example, the assistance information may further include a related measurement configuration in first configuration information.

**In** this implementation, the UE 101 may send the assistance information to the network device 102 via a *LocationMeasurementInfo* message.

**In** this implementation, after obtaining the assistance information, the network device 102 may determine the carrier on which the UE 101 with the capability supports measuring the PRS and determine when the UE 101 with the capability performs positioning measurement, so that the network device 102 may adaptively configure a time-frequency resource of the measurement gap, for example, configuring a frequency domain position (carrier) and a time domain position (offset and period, etc.) of the measurement gap, i.e., determining the measurement configuration information.

**In** some possible implementations, the network device 102 may send the measurement configuration information to the UE 101 via radio resource control (RRC) signaling.

At step S304, the UE 101 receives the measurement configuration information.

**In** some possible implementations, the UE 101 may learn the time-frequency position of the measurement gap based on the measurement configuration information, i.e., learning the time-frequency position for monitoring the PRS.

At step S305, the network device 102 sends the PRS within the measurement gap.

**In** some possible implementations, in combination with the measurement configuration, the network device 102 sends the PRS at a reasonable time-frequency position on at least one carrier of the multiple carriers.

In some possible implementations, within a time domain interval corresponding to the measurement gap, the network device 102 sends the PRS on at least one carrier of the multiple carriers while not performing scheduling on other carriers of the multiple carriers.

At step S306, the UE 101 receives and measures the PRS within the measurement gap.

In some possible implementations, the UE 101 receives and measures the PRS sent by the network device 102 within the measurement gap based on the measurement configuration information.

**In** some possible implementations, there may be multiple network devices 102 sending the PRS, or the network device 102 may be configured to send the PRS on multiple carriers.

In some possible implementations, the UE 101 measures the received PRS, to obtain a measurement result.

In an example, the measurement result includes one or more of a transmission delay, a time difference of arrival (TDOA), an angle of departure (AOD).

In some possible implementations, the UE 101 sends the measurement result to the network device 102, and the network device 102 forwards the measurement result to the LMF 103. The LMF 103 perform positioning-related calculations based on the measurement result, for example determining position information of the UE 101.

In an example, the position information may include a geographic position of the UE 101, such as position coordinates, which may represent the longitude, latitude, and altitude of the UE 101. Alternatively, the position information may include a city or regional position of the UE 101. Alternatively, the position information may include relative coordinates of the UE 101, such as relative coordinates relative to a known position point.

**In** a specific example, the LMF 103 configures PRS resources for the UE 101 on CC1 and CC2. The network device 102 may configure measurement gaps applied to CC1 and CC2 in combination with a configuration of the LMF 103 and the assistance information of the UE 101. The network device 102 sends PRSs within the time domain intervals corresponding to the measurement gaps for CC1 and CC2, respectively. The UE 101 receives the PRSs on CC1 and CC2 during the measurement gaps, and obtains measurement results of the PRSs.

**In** an example, the network device 102 does not perform scheduling of the set downlink signal within the measurement gap on other supported carriers such as CC3 and CC4, such as neither sending a downlink reference signal nor sending a PDCCH.

In this embodiment of the present disclosure, in the scenario where the SCS for the PRS and the SCS for the set downlink signal are the same, when the UE 101 does not support the first capability, the network device 102 may configure with resources for measuring the PRSs on multiple carriers for the UE 101 with the capability, so that the UE 101 may implement positioning measurement under the multiple carriers and improve the positioning accuracy. During the positioning measurement, the network device 102 does not perform scheduling of the set downlink signal.

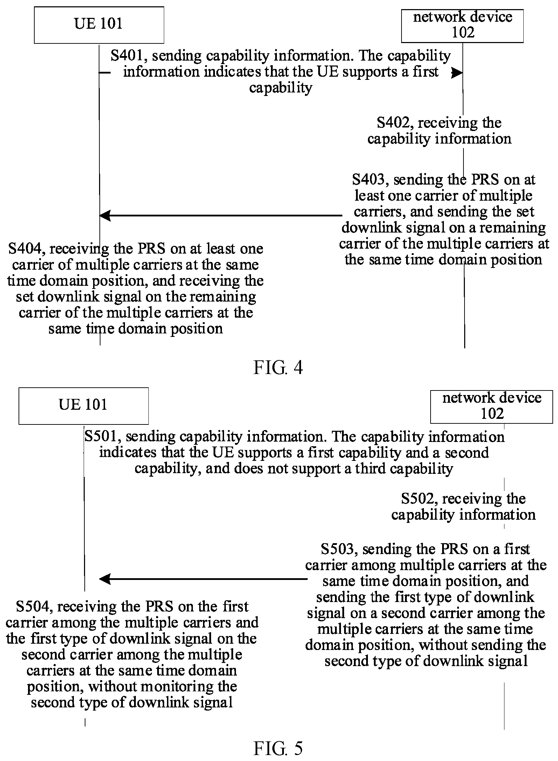

The embodiments of the present disclosure provide a method for sending/receiving capability information. With reference to FIG 4, FIG 4 is a flowchart of a method for sending/receiving capability information according to an embodiment. As shown in FIG 4, the method may include steps S401 to S404 specifically.

At step S401, the UE 101 sends capability information to the network device 102. The capability information indicates that the UE 101 supports a first capability. The first capability corresponds to a capability of receiving a positioning reference signal (PRS) and a set downlink signal on different carriers at a same time domain position in case that an SCS for the PRS and an SCS for the set downlink signal are the same.

**In** some possible implementations, when the UE 101 supports the first capability, the UE 101 generally supports a second capability and a third capability.

At step S402, the network device 102 receives the capability information.

**At** step S403, the network device 102 sends the PRS on at least one carrier of multiple carriers, and sends the set downlink signal on a remaining carrier of the multiple carriers at the same time domain position.

In some possible implementations, the set downlink signal may include a first type of downlink signal and/or a second type of downlink signal.

In some possible implementations, the network device 102 may send the PRS on at least one carrier based on second configuration information. Among the multiple carriers supported by the network device 102, the second configuration information may configure a time-frequency resource for sending the PRS on partial carriers, in this case, the network device 102 may further use the remaining carrier to perform scheduling of the set downlink signal.

**In** an example, the network device 102 may further indicate a time-frequency resource of the set downlink signal.

At step S404, the UE 101 receives the PRS on at least one carrier of multiple carriers at the same time domain position, and receives the set downlink signal on the remaining carrier of the multiple carriers at the same time domain position.

**In** a specific example, the LMF 103 PRS resources for the UE 101 on CC1 and CC2.

**In** combination of the second configuration information, the network device 102 sends the PRSs on CC1 and CC2, respectively.

When the network device 102 and the UE 101 support more carriers, the network device 102 may further send a downlink reference signal on CC3 and sends a PDCCH on CC4 at the same time domain position. The SCSs for the PRS, the downlink reference signal and the PDCCH are the same.

In an example, the UE 101 supporting the first capability receives the PRSs on CC1 and CC2, and receives the downlink reference signal on CC3 and the PDCCH on CC4 at the same time domain position.

In this embodiment of the present disclosure, in the scenario where the SCSs for the signals are the same, when the UE 101 supports the first capability, the network device 102 may send the PRS and the set downlink signal on different carriers in combination with the UE 101 with the capability, so that the UE 101 may implement other downlink scheduling under the scenario of positioning measurement based on multiple carriers.

The embodiments of the present disclosure provide a method for sending/receiving capability information. With reference to FIG. 5, FIG 5 is a flowchart of a method for sending/receiving capability information according to an embodiment. As shown in FIG 5, the method may include steps S501 to S504 specifically.

At step S501, the UE 101 sends capability information to the network device 102. The capability information indicates that the UE 101 supports a first capability and a second capability, and does not support a third capability.

The first capability corresponds to a capability of receiving a positioning reference signal (PRS) and a set downlink signal on different carriers at a same time domain position in case that an SCS for the PRS and an SCS for the set downlink signal are the same.

The second capability corresponds to a capability of receiving the PRS and a first type of downlink signal on different carriers at the same time domain position in case that an SCS for the PRS is different from an SCS for the first type of downlink signal.

The third capability corresponds to a capability of receiving the PRS and a second type of downlink signal on different carriers at the same time domain position in case that an SCS for the PRS is different from an SCS for the second type of downlink signal.

At step S502, the network device 102 receives the capability information.

At step S503, the network device 102 sends the PRS on a first carrier among multiple carriers at the same time domain position, and sends the first type of downlink signal on a second carrier among the multiple carriers at the same time domain position, without sending the second type of downlink signal.

The term "first" or "second" in the first carrier or the second carrier is only used to distinguish different carriers, but not to limit the number of carriers. For example, the first carrier or the second carrier may include at least one carrier.

In some possible implementations, the network device 102 may further indicate a time-frequency resource of the first type of downlink signal.

At step S504, the UE 101 receives the PRS on the first carrier among the multiple carriers and the first type of downlink signal on the second carrier among the multiple carriers at the same time domain position, without monitoring the second type of downlink signal.

In a specific example, in combination of second configuration information, the network device 102 sends the PRSs on CC1 and sends a downlink reference signal on CC2 at the same time.

In combination of first configuration information and indication of the network device 102, the UE 101 receives the PRS on CC1 and the SSB on CC2 at the same time. A positioning measurement result may be obtained based on measurement of the PRS, and reported to the LMF 103 through the network device 102. A mobility measurement result may be obtained based on measurement of the SSB, and reported to the network device 102. In the example, during the measurement, scheduling of the second type of downlink signal, such as PDCCH, etc. is not performed.

**In** other examples, the LMF 103 may configure the PRSs on both CC1 and CC2. The network device 102 may further send the PRSs on CC1 and CC2, and send the SSB on CC3 at the same time. The SCSs for the PRS and the SSB are different.

In this embodiment of the present disclosure, in the scenario where the SCSs for the signals are different, when the UE 101 supports the first capability and the second capability, the network device 102 may send the PRS and the first type of downlink signal on different carriers in combination with the UE 101 with the capability, so that the UE 101 may implement mobility measurement under the scenario of positioning measurement based on multiple carriers, but the network device 102 does not perform scheduling of other downlink data during the measurement.

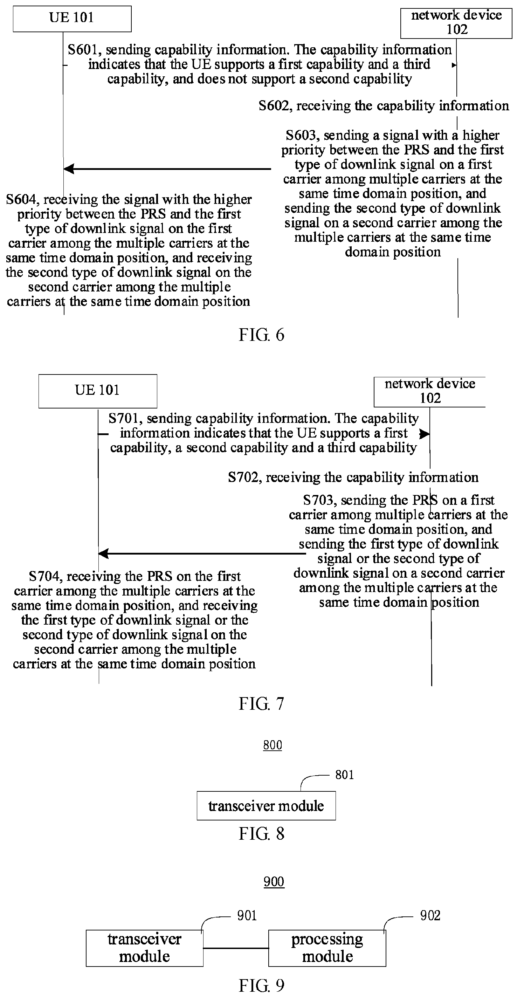

The embodiments of the present disclosure provide a method for sending/receiving capability information. With reference to FIG 6, FIG 6 is a flowchart of a method for sending/receiving capability information according to an embodiment. As shown in FIG 6, the method may include steps S601 to S604 specifically.

At step S601, the UE 101 sends capability information to the network device 102. The capability information indicates that the UE 101 supports a first capability and a third capability, and does not support a second capability.

The first capability corresponds to a capability of receiving a positioning reference signal (PRS) and a set downlink signal on different carriers at a same time domain position in case that an SCS for the PRS and an SCS for the set downlink signal are the same.

The second capability corresponds to a capability of receiving the PRS and a first type of downlink signal on different carriers at the same time domain position in case that an SCS for the PRS is different from an SCS for the first type of downlink signal.

The third capability corresponds to a capability of receiving the PRS and a second type of downlink signal on different carriers at the same time domain position in case that an SCS for the PRS is different from an SCS for the second type of downlink signal.

At step S602, the network device 102 receives the capability information.

At step S603, the network device 102 sends a signal with a higher priority between the PRS and the first type of downlink signal on a first carrier among multiple carriers at the same time domain position, and sends the second type of downlink signal on a second carrier among the multiple carriers at the same time domain position.

The term "first" or "second" in the first carrier or the second carrier is only used to distinguish different carriers, but not to limit the number of carriers. For example, the first carrier or the second carrier may include at least one carrier.

**In** some possible implementations, the network device 102 may further send indication information to the UE 101. The indication information is used to indicate a priority of the first type of downlink signal and a priority of the PRS.

In an example, if the priority of the PRS is higher, the network device 102 sends the PRS on the first carrier among the multiple carriers.

**At** step S604, the UE 101 receives the signal with the higher priority between the PRS and the first type of downlink signal on the first carrier among the multiple carriers at the same time domain position, and receives the second type of downlink signal on the second carrier among the multiple carriers at the same time domain position.

In some possible implementations, if the priority of the PRS is higher, the UE 101 receives the PRS on the first carrier for positioning measurement.

For example, the network device 102 simultaneously sends the PRS on CC1 and a PDCCH on CC2 at time t1. The UE 101 simultaneously receives the PRS on CC1 and the PDCCH on CC2 at time t2. It can be understood that this embodiment is only to illustrate the capability of the UE 101 to simultaneously receive different signals on multiple carriers. In an actual application, transmission delays and processing delays of different signals may be different. The same time domain position where the network device 102 sends different signals may correspond to a same time domain interval. The sending time needs to satisfy that the UE 101 is able to simultaneously receive signals on different carriers.

In this embodiment of the present disclosure, in the scenario where the SCSs for the PRS and the second type of downlink signal are different, when the UE 101 supports the first capability and the third capability, the network device 102 may send the PRS and the second type of downlink signal on different carriers in combination with the UE 101 with the capability, so that the UE 101 may implement scheduling of downlink data under the scenario of positioning measurement based on multiple carriers, but the network device 102 does not configure mobility measurement during the scheduling.

The embodiments of the present disclosure provide a method for sending/receiving capability information. With reference to FIG 7, FIG 7 is a flowchart of a method for sending/receiving capability information according to an embodiment. As shown in FIG 7, the method may include steps S701 to S704 specifically.

At step S701, the UE 101 sends capability information to the network device 102. The capability information indicates that the UE 101 supports a first capability, a second capability and a third capability.

The first capability corresponds to a capability of receiving a positioning reference signal (PRS) and a set downlink signal on different carriers at a same time domain position in case that an SCS for the PRS and an SCS for the set downlink signal are the same.

The second capability corresponds to a capability of receiving the PRS and a first type of downlink signal on different carriers at the same time domain position in case that an SCS for the PRS is different from an SCS for the first type of downlink signal.

The third capability corresponds to a capability of receiving the PRS and a second type of downlink signal on different carriers at the same time domain position in case that an SCS for the PRS is different from an SCS for the second type of downlink signal.

At step S702, the network device 102 receives the capability information.

**At** step S703, the network device 102 sends the PRS on a first carrier among multiple carriers at the same time domain position, and sends the first type of downlink signal or the second type of downlink signal on a second carrier among the multiple carriers at the same time domain position.

At step S704, the UE 101 receives the PRS on the first carrier among the multiple carriers at the same time domain position, and receives the first type of downlink signal or the second type of downlink signal on the second carrier among the multiple carriers at the same time domain position.

For example, the network device 102 simultaneously sends the PRS on CC1 and an SSB or PDCCH on CC2 at time t1. The UE 101 simultaneously receives the PRS on CC1 and the SSB or PDCCH on CC2 at time t2. It can be understood that this embodiment is only to illustrate the capability of the UE 101 to simultaneously receive different signals on multiple carriers. In an actual application, transmission delays and processing delays of different signals may be different. The same time domain position where the network device 102 sends different signals may correspond to a same time domain interval. The sending time needs to satisfy that the UE 101 is able to simultaneously receive signals on different carriers.

**In** the embodiment of the present disclosure, when it is applicable to a communication scenario of two carriers, and the SCS for the PRS is different from the SCS for the set downlink signal. In this scenario, when the UE 101 supports the first capability, the second capability and the third capability, the UE 101 receives the PRS on the first carrier to achieve positioning measurement, and may receive the first type of downlink signal for mobility measurement on the second carrier or receive the second type of downlink signal for data transmission on the second carrier.

The method for sending/receiving capability information according to an embodiment of the present disclosure may include steps S701, S702, S703' and S704'.

At step S701, the UE 101 sends capability information to the network device 102. The capability information indicates that the UE 101 supports a first capability, a second capability and a third capability.

At step S702, the network device 102 receives the capability information.

At step S703', the network device 102 sends the PRS on a first carrier among multiple carriers at the same time domain position, sends the first type of downlink signal on a second carrier among the multiple carriers at the same time domain position, and sends the second type of downlink signal on a third carrier among the multiple carriers at the same time domain position.

At step S704', the UE 101 receives the PRS on a first carrier among multiple carriers at the same time domain position, receives the first type of downlink signal on a second carrier among the multiple carriers at the same time domain position, and receives the second type of downlink signal on a third carrier among the multiple carriers at the same time domain position.

For example, the network device 102 simultaneously sends the PRS on CC1, an SSB on CC2 and a PDCCH on CC3 at time t1. The UE 101 simultaneously receives the PRS on CC1, the SSB or PDCCH and the PDCCH on CC3 on CC2 at time t2. It can be understood that the time domain position may correspond to a time domain interval. This embodiment is only to illustrate the capability of the UE 101 to simultaneously receive different signals on multiple carriers. In an actual application, transmission delays and processing delays of different signals may be different. The same time domain position where the network device 102 sends different signals may correspond to a same time domain interval. The sending time needs to satisfy that the UE 101 is able to simultaneously receive signals on different carriers.

The term "first", "second" or "third" in the first carrier, the second carrier or the third carrier is only used to distinguish different carriers, but not to limit the number of carriers. For example, the first carrier, the second carrier or the third carrier may include at least one carrier.

In the embodiment of the present disclosure, when it is applicable to a communication scenario of more than two carriers, and the SCS for the PRS is different from the SCS for the set downlink signal. In this scenario, when the UE 101 supports the first capability, the second capability and the third capability, the UE 101 receives the PRS on the first carrier to achieve positioning measurement, and may receive the first type of downlink signal for mobility measurement on the second carrier or receive the second type of downlink signal for data transmission.

Based on the same concept as the above method embodiments, the embodiment of the present disclosure also provides a UE 101, which is used to execute the steps performed by the UE 101 provided in the above embodiments.

In a possible implementation, an apparatus 800 shown in FIG 8 may serve as the UE 101 involved in the above method embodiments, and execute the steps executed by the UE 101 in the above method embodiments.

The apparatus 800 includes a transceiver module 801. The transceiver module 801 may be used to support the communication apparatus to perform communication.

The transceiver module 801 is configured to send capability information to a network device, in which the capability information includes a capability of the UE to receive a positioning reference signal (PRS) and a set downlink signal on different carriers at a same time domain position.

Based on the same concept as the above method embodiments, the embodiment of the present disclosure also provides a network device 102, which is used to execute the steps performed by the network device 102 provided in the above embodiments.

In a possible implementation, an apparatus 900 shown in FIG 9 may serve as the network device 102 involved in the above method embodiments, and execute the steps executed by the network device 102 in the above method embodiments.

The apparatus 900 includes a transceiver module 901 and a processing module 902. The transceiver module 901 may be used to support the communication apparatus to perform communication. The processing module 902 may be used for the communication apparatus to perform processing operations, such as generating information/messages to be sent, or processing a received signal to obtain information/messages.

The transceiver module 901 is configured to receive capability information sent by a user equipment (UE), in which the capability information includes a capability of the UE to receive a positioning reference signal (PRS) and a set downlink signal on different carriers at a same time domain position.

The processing module 902 is configured to perform scheduling according to the capability information.

An embodiment of the present disclosure further provides a communication apparatus including a processor and a memory.

The memory is configured for storing a computer program.

The processor is configured to execute the computer program, to implement the method executed by the UE 101.

An embodiment of the present disclosure further provides a computer-readable storage medium for storing instructions. When the instructions are executed on a computer, the computer is caused to implement the method executed by the UE 101.

An embodiment of the present disclosure further provides a communication apparatus including a processor and a memory.

The memory is configured for storing a computer program.

The processor is configured to execute the computer program, to implement the method executed by the network device 102.

An embodiment of the present disclosure further provides a computer-readable storage medium for storing instructions. When the instructions are executed on a computer, the computer is caused to implement the method executed by the network device 102.

Those skilled in the art will readily appreciate other implementations of the embodiments of the present disclosure after considering the specification and practicing the present disclosure. The present disclosure is intended to cover any variations, uses, or adaptations of the embodiments of the present disclosure, which follow the general principles of the embodiments of the present disclosure and include common knowledges or customary techniques in the art that are not disclosed in the present disclosure. The specification and the embodiments should be considered merely exemplary, and the true scope and spirit of the embodiments of the present disclosure are indicated by the appended claims.

It should be understood that the embodiments of the present disclosure are not limited to precise structures described above and shown in the drawings, and various modifications and changes may be made without departing from the scope thereof. The scope of the embodiments of the present disclosure is limited only by the appended claims.

### Industrial Applicability

In the method of the present disclosure, the UE sends capability information to the network device to report its capability of receiving the PRS and the set downlink signal on multiple carriers to the network device. In this way, the network device may learn the capability of the UE to receive signals in the multi-carrier positioning measurement scenario, so as to perform reasonable scheduling in combination with the capability of the UE.

## Claims

1. A method for sending capability information, performed by a user equipment (UE), comprising:
sending capability information to a network device, wherein the capability information comprises a capability of the UE to receive a positioning reference signal (PRS) and a set downlink signal on different carriers at a same time domain position.

2. The method of claim 1, wherein the set downlink signal comprises at least one of:
a first type of downlink signal used for mobility measurement; or
a second type of downlink signal used to carry data.

3. The method of claim 2, wherein
a sub-carrier spacing (SCS) for the PRS is the same as an SCS for the set downlink signal, and the capability information is a first capability of receiving the PRS and the set downlink signal on different carriers at the same time domain position; or
an SCS for the PRS is different from an SCS for the first type of downlink signal, and the capability information is a second capability of receiving the PRS and the first type of downlink signal on different carriers at the same time domain position; or
an SCS for the PRS is different from an SCS for the second type of downlink signal, and the capability information is a third capability of receiving the PRS and the second type of downlink signal on different carriers at the same time domain position.

4. The method of claim 3, further comprising:
receiving measurement configuration information sent by the network device, wherein the measurement configuration information comprises a measurement gap for measuring the PRS; and
receiving and measuring the PRS within the measurement gap, wherein the UE does not support the first capability.

5. The method of claim 3, further comprising:
receiving the PRS on at least one carrier among multiple carriers at the same time domain position and receiving the set downlink signal on a remaining carrier among the multiple carriers at the same time domain position, wherein the UE supports the first capability.

6. The method of claim 3, further comprising:
receiving the PRS on a first carrier among multiple carriers and the first type of downlink signal on a second carrier among the multiple carriers at the same time domain position without monitoring the second type of downlink signal, wherein the UE supports the first capability and the second capability, but does not support the third capability.

7. The method of claim 3, further comprising:
receiving a signal with a higher priority between the PRS and the first type of downlink signal on a first carrier among multiple carriers at the same time domain position, and receiving the second type of downlink signal on a second carrier among the multiple carriers at the same time domain position, wherein the UE supports the first capability and the third capability, but does not support the second capability.

8. The method of claim 3, further comprising:
receiving the PRS on a first carrier among multiple carriers at the same time domain position, and receiving the first type of downlink signal or the second type of downlink signal on a second carrier among the multiple carriers at the same time domain position, wherein the UE supports the first capability, the second capability and the third capability.

9. The method of claim 3, further comprising:
receiving the PRS on a first carrier among multiple carriers at the same time domain position, and receiving the first type of downlink signal on a second carrier among the multiple carriers and the second type of downlink signal on a third carrier among the multiple carriers at the same time domain position, wherein the UE supports the first capability, the second capability and the third capability.

10. The method of any one of claims 2 to 9, wherein the first type of downlink signal comprises one of:
a synchronization signal block (SSB); or
a channel state information reference signal (CSI-RS).

11. The method of any one of claims 2 to 9, wherein the second type of downlink signal comprises one of:
a physical downlink shared channel (PDSCH); or
a physical downlink control channel (PDCCH).

12. A method for receiving capability information, performed by a network device, comprising:
receiving capability information sent by a user equipment (UE), wherein the capability information comprises a capability of the UE to receive a positioning reference signal (PRS) and a set downlink signal on different carriers at a same time domain position; and
performing scheduling according to the capability information.

13. The method of claim 12, wherein:
a sub-carrier spacing (SCS) for the PRS is the same as an SCS for the set downlink signal, and the capability information is a first capability of receiving the PRS and the set downlink signal on different carriers at the same time domain position; or
an SCS for the PRS is different from an SCS for a first type of downlink signal, and the capability information is a second capability of receiving the PRS and the first type of downlink signal on different carriers at the same time domain position; or
an SCS for the PRS is different from an SCS for a second type of downlink signal, and the capability information is a third capability of receiving the PRS and the second type of downlink signal on different carriers at the same time domain position.

14. The method of claim 13, wherein performing scheduling according to the capability information comprises:
sending measurement configuration information to the UE, wherein the measurement configuration information comprises a measurement gap for measuring the PRS; and
sending the PRS within the measurement gap, wherein the UE does not support the first capability.

15. The method of claim 13, wherein performing scheduling according to the capability information comprises:
sending the PRS on at least one carrier among multiple carriers at the same time domain position, and sending the set downlink signal on a remaining carrier among the multiple carriers at the same time domain position, wherein the UE supports the first capability.

16. The method of claim 13, wherein performing scheduling according to the capability information comprises:
sending the PRS on a first carrier among multiple carriers and the first type of downlink signal on a second carrier among the multiple carriers at the same time domain position without sending the second type of downlink signal, wherein the UE supports the first capability and the second capability, but does not support the third capability.

17. The method of claim 13, wherein performing scheduling according to the capability information comprises:
sending a signal with a higher priority between the PRS and the first type of downlink signal on a first carrier among multiple carriers at the same time domain position, and sending the second type of downlink signal on a second carrier among the multiple carriers at the same time domain position, wherein the UE supports the first capability and the third capability, and does not support the second capability.

18. The method of claim 13, wherein performing scheduling according to the capability information comprises:
sending the PRS on a first carrier among multiple carriers at the same time domain position, and sending the first type of downlink signal or the second type of downlink signal on a second carrier among the multiple carriers at the same time domain position, wherein the UE supports the first capability, the second capability and the third capability.

19. The method of claim 13, wherein performing scheduling according to the capability information comprises:
sending the PRS on a first carrier among multiple carriers at the same time domain position, and sending the first type of downlink signal on a second carrier among the multiple carriers and the second type of downlink signal on a third carrier among the multiple carriers at the same time domain position, wherein the UE supports the first capability, the second capability and the third capability.

20. A user equipment (UE), comprising:
a transceiver module, configured to send capability information to a network device, wherein the capability information comprises a capability of the UE to receive a positioning reference signal (PRS) and a set downlink signal on different carriers at a same time domain position.

21. A network device, comprising:
a transceiver module, configured to receive capability information sent by a user equipment (UE), wherein the capability information comprises a capability of the UE to receive a positioning reference signal (PRS) and a set downlink signal on different carriers at a same time domain position; and
a processing module, configured to perform scheduling according to the capability information.

22. A communication apparatus, comprising:
a processor; and
a memory for storing a computer program;
wherein the processor is configured to execute the computer program, to implement the method of any one of claims 1 to 11.

23. A communication apparatus, comprising:
a processor; and
a memory for storing a computer program;
wherein the processor is configured to execute the computer program, to implement the method of any one of claims 12 to 19.

24. A computer-readable storage medium for storing instructions, wherein when the instructions are executed on a computer, the computer is caused to implement the method of any one of claims 1 to 11.

25. A computer-readable storage medium for storing instructions, wherein when the instructions are executed on a computer, the computer is caused to implement the method of any one of claims 12 to 19.

26. A communication system, comprising a user equipment (UE) and a network device, wherein
the UE is configured to execute the method of any one of claims 1 to **11;**
the network device is configured to execute the method of any one of claims 12-19.
